# FASCICULE DE BREVET EUROPEEN

(11) **EP 2 852 636 B1**
(45) Date de publication et mention de la délivrance du brevet: **29.03.2017**
(21) Numéro de dépôt: 13725114.6
(22) Date de dépôt: 16.05.2013
(51) Int. Cl.: C08L 9/00, C08L 9/06, B60C 1/00, C08L 21/00

(54) **COMPOSITION DE CAOUTCHOUC**
KAUTSCHUKZUSAMMENSETZUNG
RUBBER COMPOSITION

(30) Priorité: 22.05.2012 FR 1254627
(43) Date de publication de la demande: 01.04.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: HUNAULT, Vincent, F-63040 Clermont-Ferrand Cedex 9 (FR); KOBAYASHI, Kyoko, 10110 Bangkok (TH); LOPITAUX, Garance, F-63040 Clermont-Ferrand Cedex 9 (FR)
(74) Mandataire: Gandon-Pain, Sylvie
(86) Numéro de dépôt international: PCT/EP2013/060133
(87) Numéro de publication internationale: WO 2013/174709

(56) Documents cités:
- EP-A1- 1 627 900
- DE-B- 1 231 888
- GB-A- 477 268
- DATABASE WPI Week 201224 Thomson Scientific, London, GB; AN 2012-D61294 XP002683783, & JP 2012 062443 A (IPPOSHA JUSHI KOGYO KK) 29 mars 2012 (2012-03-29)

## Description

Le domaine de la présente invention est celui des compositions de caoutchouc diénique renforcées utilisables notamment pour la fabrication de pneumatiques pour véhicules.

La présente invention concerne l'utilisation d'agents d'aide à la mise en oeuvre des compositions de caoutchouc utilisées pour la fabrication des pneumatiques. Ces agents d'aide à la mise en oeuvre sont également appelés plastifiants. Le mode d'action de ces plastifiants consiste à réduire la viscosité à l'état cru de ces compositions, c'est-à-dire la viscosité des compositions avant leur réticulation.

Les plastifiants sont utilisés depuis longtemps dans les compositions d'élastomères diéniques renforcées par une charge, et destinés en particulier pour confectionner des articles de pneumatiques. Peuvent être citées à ce titre les huiles aromatiques ou non aromatiques comme par exemple les huiles naphténiques, les huiles paraffiniques, les huiles MES, les huiles minérales et les huiles végétales telles que l'huile de colza, de tournesol ou de ricin. Néanmoins l'utilisation de ces huiles dans les compositions de caoutchouc pour pneumatique s'accompagne d'une diminution de la rigidité à l'état cuit des compositions correspondantes, c'est-à-dire la rigidité des compositions après leur réticulation. Cette diminution de la rigidité à l'état cuit de la composition de caoutchouc qui s'accentue avec le taux d'huile, se traduit par exemple dans le cas de son utilisation en bande de roulement ou en sous-couche de bande de roulement, par un moindre niveau de comportement routier sur véhicule automobile, c'est-à-dire une moins bonne tenue de route du véhicule automobile. Par ailleurs l'ajout d'huile a pour effet de réduire la fraction volumique de charge renforçante et d'élastomère dans la composition de caoutchouc, ce qui a pour conséquence de diminuer la cohésion des compositions de caoutchouc.

L'amélioration de la mise en oeuvre à l'état cru (ou « processability ») des compositions élastomères renforcées sans diminuer leur rigidité et leur cohésion à l'état cuit reste une préoccupation forte des concepteurs de pneumatiques pour combiner à la fois une bonne productivité dans la fabrication des compositions d'élastomères renforcés pour pneumatique et des bonnes performances du pneumatique.

Le brevet DE1231888B concerne une composition de caoutchouc. Cette composition comprend (a) 100 parties de caoutchouc naturel (crêpe clair), (b) 80 parties de silicate d'aluminium, 20 parties d'éther cellulosique et un système de vulcanisation.

Le brevet GB477268 divulgue un procédé pour incorporer des éthers cellulosiques au caoutchouc. Ce procédé comprend le malaxage de l'ethylcellulose et du caoutchouc La présente invention a pour but d'améliorer la mise en oeuvre des compositions de caoutchouc destinées notamment à la fabrication de pneumatiques, et ceci sans diminuer la rigidité et la cohésion de la composition de caoutchouc à l'état cuit.

Ce but est atteint en ce que les Demanderesses ont déterminé lors de leurs recherches que l'utilisation d'une alkylcellulose spécifique dans une composition de caoutchouc renforcée permet de réduire la viscosité à l'état cru de la composition de caoutchouc sans en diminuer la rigidité et la cohésion à l'état cuit.

En conséquence un premier objet de l'invention concerne une composition de caoutchouc à base d'au moins un élastomère diénique, une charge renforçante et une alkylcellulose où le radical akyle est un alkyle en C1-C6, à condition que si la charge renforçante est une charge inorganique, elle contient en outre un agent de couplage pour lier l'élastomère diénique à la charge inorganique.

L'invention a également pour objet un procédé pour préparer la composition de caoutchouc conforme à l'invention.

L'invention a également pour objet un pneumatique comprenant au moins une composition de caoutchouc telle que définie plus haut.

### I. MESURES ET TESTS UTILISES

Les compositions de caoutchouc sont caractérisées comme indiqué ci-après.
a) La viscosité Mooney ML (1+4) à 100° C est mesurée selon la norme ASTM D-1646 avec un consistomètre oscillant. La mesure de la viscosité Mooney se fait selon le principe suivant : l'échantillon analysé à l'état cru (i.e., avant cuisson) est moulé (mis en forme) dans une enceinte cylindrique chauffée à une température donnée (par exemple 35°C ou 100°C). Après une minute de préchauffage, le rotor tourne au sein de l'éprouvette à 2 tours/minute et on mesure le couple utile pour entretenir ce mouvement après 4 minutes de rotation.
(b) La dureté Shore A est mesurée selon la norme DIN 53505.
(c) Les allongements à la rupture (notés AR en %) et les contraintes à la rupture sont mesurés par des essais de traction selon la norme française NF T 46-002 25 de septembre 1988. (note AR, en %). Toutes ces mesures de traction sont effectuées dans les conditions normales de température (23 ± 30 2°C) et d'hygrométrie (50 ± 5% d'humidité relative), selon la norme française NF T 40-101 (décembre 1979).

### II. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

### II.1. Elastomère diénique :

Une caractéristique essentielle de la composition de caoutchouc conforme à l'invention est de comprendre au moins un élastomère diénique.

Par élastomère diénique, qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 à 99% en poids d'unités diéniques et de 1 à 80% en poids d'unités vinylaromatique.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

La composition de caoutchouc de l'invention peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II.2. Charge renforçante :

Une autre caractéristique essentielle de la composition de caoutchouc conforme à l'invention est de comprendre une charge renforçante.

La composition de l'invention comporte tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants, par exemple décrits dans US 6 610 261 et US 6 747 087.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Selon un mode de réalisation particulier, à cette charge inorganique renforçante peut être ajoutée une charge organique. Comme charge organique, on préfère un noir de carbone, comme ceux cités précédemment.

Selon un mode de réalisation plus particulier et préférentiel, le noir de carbone, lorsqu'il est combiné à une charge inorganique renforçante telle que la silice, est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Dans le présent exposé, la surface spécifique BET est déterminée de manière connue par adsorption de gaz à l'aide de la méthode de Brunauer-Emmett-Teller décrite dans *"*The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *plpo* : 0.05 à 0.17). La surface spécifique CTAB est la surface externe déterminée selon la norme française NF T 45-007 de novembre 1987 (méthode B).

Comme exemples de charges organiques autres que des noirs de carbone, on peut citer les charges organiques de polyvinyle fonctionnalisé telles que décrites dans les demandes de brevetWO-A-2006/069792, WO-A-2006/069793, WO-A-2008/003434 et WO-A-2008/003435.

De manière préférentielle, le taux de charge renforçante totale est compris entre 30 et 150 pce. En deçà de 30 pce, le renforcement de la composition de caoutchouc est insuffisant pour apporter un niveau de cohésion ou de résistance à l'usure adéquats du composant caoutchouteux du pneumatique comprenant cette composition. De manière encore plus préférentielle, le taux de charge renforçante totale est d'au moins 50 pce. Au-delà de 150 pce, il existe un risque d'augmentation de l'hystérèse et donc de la résistance au roulement des pneumatiques. Pour cette raison, le taux de charge renforçante totale est de préférence dans un domaine allant de 50 à 120 pce, notamment pour un usage dans une bande de roulement de pneumatique.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - Sₓ - A - Z ,

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 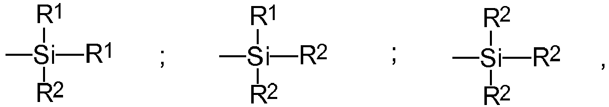 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle). - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2010/072685 et WO 2008/055986.

Bien entendu pourraient être également utilisés des mélanges des agents de couplage précédemment décrits, comme décrit notamment dans la demande WO 2006/125534 précitée.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

### II.3. Alkylcellulose :

La composition de caoutchouc conforme à l'invention a pour autre caractéristique essentielle de comprendre une alkylcellulose où le radical alkyle est un alkyle en C1-C6. Pour rappel un radical alkyle est un groupe saturé constitué de carbone et d'hydrogène.

La synthèse d'alkylcellulose en C1-C6 est bien connue, en particulier à partir de la réaction d'alkylation du chlorure d'alkyle correspondant avec une cellulose alcaline, c'est-à-dire une cellulose au préalable traitée dans une solution alcaline.

L'utilisation d'alkylcellulose à un taux élevé, en particulier supérieur à 50 pce, peut rendre la dispersion de l'alkylcellulose dans la composition de caoutchouc plus ou moins délicate selon les applications considérées, et peut conduire à une dispersion hétérogène de l'alkylcellulose dans la composition de caoutchouc. C'est pourquoi l'alkylcellulose est utilisée de préférence à un taux n'excédant pas 50 pce dans la composition de caoutchouc.
A l'inverse un taux trop faible peut conduire à un effet qui peut être considéré comme insuffisant. L'alkylcellulose est préférentiellement utilisée à un taux d'au moins 1 pce. Préférentiellement l'alkylcellulose est utilisée à un taux allant de 1 à 50 pce.

Pour optimiser davantage le compromis de propriétés entre la viscosité de la composition de caoutchouc à l'état cru et la cohésion et la rigidité de la composition à l'état cuit, l'alkylcellulose est utilisée préférentiellement à un taux allant de 1 à 30 pce, encore plus préférentiellement de 2 à 25 pce, en particulier de 3 à 20 pce.

Selon un mode de réalisation particulier de l'invention, l'alkylcellulose est l'éthylcellulose.

L'éthylcellulose est un produit commercial, par exemple vendu par Hercules et Dow Chemical Company sous les appellations commerciales respectives Aqualon™ Ethylcellulose et Ethocel, ou encore par Aldrich. Généralement l'éthylcellulose présente un degré de substitution en groupement éthoxy entre 2 et 3 (en particulier de 2.2 à 2.8) par unité d'anhydroglucose.

### II.4. Additifs divers:

Les compositions de caoutchouc conformes à l'invention peuvent également contenir des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des plastifiants ou des huiles d'extension, que ces derniers soient de nature aromatique ou non-aromatique, notamment des huiles très faiblement ou non aromatiques (e.g., huiles paraffiniques, naphténiques hydrogénées, huiles MES ou TDAE), des huiles végétales, les plastifiants éthers, les plastifiants esters (par exemple les trioléates de glycérol), des charges autres que celles précitées, par exemple des charges lamellaires, des résines plastifiantes hydrocarbonées présentant une haute Tg, de préférence supérieure à 30°C, telles que décrites par exemple dans les demandes WO 2005/087859, WO 2006/061064 et WO 2007/017060, des pigments, des agents de protection tels que cires anti-ozone, anti-ozonants chimiques, anti-oxydants, des agents anti-fatigue, des résines renforçantes (tels que résorcinol ou bismaléimide), des accepteurs (par exemple résine phénolique novolaque) ou des donneurs de méthylène (par exemple HMT ou H3M) tels que décrits par exemple dans la demande WO 02/10269, un système de réticulation de préférence à base de soufre, mais également de donneurs de soufre, et/ou de peroxyde et/ou de bismaléimides, des accélérateurs ou retardateurs de vulcanisation, des activateurs de vulcanisation.
Les résines plastifiantes hydrocarbonées citées ci-dessus sont des polymères bien connus de l'homme du métier et sont à base essentiellement à base de carbone et d'hydrogène, mais peuvent comporter d'autres types d'atomes.

La composition de caoutchouc selon l'invention est fabriquée de manière connue en soi dans des mélangeurs appropriés.

### II.5. Fabrication de la composition de caoutchouc :

La composition de caoutchouc conforme à l'invention à base d'au moins un élastomère diénique, une charge renforçante et une alkylcellulose selon l'invention est fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

Le procédé conforme à l'invention pour préparer la composition de caoutchouc conforme à l'invention comprend les étapes suivantes :
- incorporer à un élastomère diénique, au cours d'une première étape dite non productive, une charge renforçante, une alkylcellulose selon l'invention ainsi que les autres ingrédients de la composition à l'exception du système de réticulation en malaxant thermomécaniquement le tout jusqu'à atteindre une température maximale comprise entre 110 et 190°C ;
- refroidir l'ensemble à une température inférieure à 100°C ;
- incorporer ensuite, au cours d'une seconde étape dite productive un système de réticulation ;
- malaxer le tout jusqu'à une température maximale inférieure à 110°C.

Selon un mode de réalisation préférentiel de l'invention, le système de réticulation est à base de soufre.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé comme composant caoutchouteux pour la confection du pneumatique.

Ainsi selon un mode de réalisation particulier de l'invention, la composition de caoutchouc conforme à l'invention, pouvant être soit à l'état cru (avant réticulation ou vulcanisation), soit à l'état cuit (après réticulation ou vulcanisation), est dans une bande de roulement de pneumatique ou une sous-couche de bande de roulement de pneumatique, sous-couche qui est radialement intérieure à la bande de roulement et adjacente à celle-ci.

Les caractéristiques précitées de la présente invention, ainsi que d'autres, seront mieux comprises à la lecture de la description suivante de plusieurs exemples de réalisation de l'invention, donnés à titre illustratif et non limitatif, et des figures relatives à ces exemples et illustrant les compromis plasticité rigidité d'une part, et hystérèse rigidité d'autre part.

### EXEMPLES DE REALISATION DE L'INVENTION

### Préparation des compositions de caoutchouc

On procède pour les essais qui suivent de la manière suivante : dans un mélangeur interne rempli à 70% et dont la température initiale de cuve est de 60°C, sont malaxés les élastomères diéniques, le noir de carbone, la silice, le silane, l'antioxydant, l'anti-ozonant, les activateurs de vulcanisation, les plastifiants et l'alkylcellulose conforme à l'invention. Après un travail thermomécanique qui dure au maximum 6 minutes pour une vitesse moyenne des palettes de 40 tours/minute dans un mélangeur d'environ 3.3 litres jusqu'à atteindre une température maximale de 165°C ou un temps de mélangeage de 6 minutes, on récupère le mélange résultant, on le refroidit et on lui ajoute le système de vulcanisation (soufre et accélérateur sulfénamide sur un mélangeur externe (homo-finisseur) à 50°C, en mélangeant le tout pendant environ 5 à 6 min (phase productive).

Les compositions ainsi obtenues sont ensuite calandrées sous la forme de plaques (épaisseur de 2 à 3 mm) ou de feuilles fines de caoutchouc pour la mesure de leurs propriétés physiques ou mécaniques, ou extrudées sous la forme de profilés utilisables directement, après découpage et/ou assemblage aux dimensions souhaitées, pour obtenir un composant caoutchouteux.

### Essais

Cet exemple a pour but de montrer l'amélioration de la viscosité à l'état cru de la composition de caoutchouc conforme à l'invention sans diminuer la rigidité et la cohésion de la composition à l'état cuit, comparativement à une composition témoin exempte d'alkylcellulose conforme à l'invention.

Les quatre compositions A, B, C et D ont été fabriquées conformément au procédé détaillé dans le paragraphe précédent. Ces compositions détaillées dans le tableau 1 suivant (où les quantités sont exprimées en pce, parties en poids pour cent parties d'élastomère), diffèrent par la quantité d'alkylcellulose. Plus précisément elles diffèrent en ce que :
- la composition A, exemple témoin est exempte d'alkylkcellulose ;
- la composition B, exemple conforme à l'invention, contient 5 pce d'éthylcellulose ;
- la composition C, exemple conforme à l'invention, contient 10 pce d'éthylcellulose ;
- et la composition D, exemple conforme à l'invention, contient 15 pce d'éthylcellulose.

Les formulations sont présentées dans le tableau 1 qui suit.

**Tableau 1**

| **Composition** | A | B | C | D |
|---|---|---|---|---|
| SSBR (1) | 74 | 74 | 74 | 74 |
| BR (2) | 26 | 26 | 26 | 26 |
| Silice (3) | 80 | 80 | 80 | 80 |
| N234 | 5 | 5 | 5 | 5 |
| Résine polylimonène (4) | 13 | 13 | 13 | 13 |
| Huile (5) | 18 | 18 | 18 | 18 |
| Agent de couplage (6) | 6.4 | 6.4 | 6.4 | 6.4 |
| Cire anti-ozonante | 1.5 | 1.5 | 1.5 | 1.5 |
| 6PPD (7) | 2 | 2 | 2 | 2 |
| Acide stéarique | 2 | 2 | 2 | 2 |
| ZnO | 1.5 | 1.5 | 1.5 | 1.5 |
| DPG (8) | 1.5 | 1.5 | 1.5 | 1.5 |
| Soufre | 1.2 | 1.2 | 1.2 | 1.2 |
| CBS (9) | 1.9 | 1.9 | 1.9 | 1.9 |
| **Ethylcellulose (10)** | - | **5** | **10** | **15** |

| | | | | |
|---|---|---|---|---|
| (1) SSBR à 57% de motif 1,2 et 25% de motif styrène (2) Polybutadiène à 98% de motif 1,4-cis (3) Silice « Ultrasil » 7000 de la société Degussa (4) Résine « Dercolyte » L120 de la société DRT (5) Huile non aromatique (MES « Catenex » SNR de la société Shell) (6) Agent de couplage TESPT "Si69" de la société Degussa (7) Santoflex 6-PPD de la société Flexsys (N-1,3-diméthylbutyl-N-phénylparaphénylènediamine) (8) Perkacit de la société Flexsys (diphénylguanidine) (9) Santocure de Flexsys (N-cyclohexyl-2-benzothiazyle sulfénamide) (10) Produit Aldrich sous la référence 43,383-7 | | | | |

On mesure la plasticité Mooney de ces compositions A, B, C et D pour déterminer la viscosité à l'état cru de chacune de ces compositions et par conséquent leur faculté de mise en oeuvre. On mesure aussi la Shore A et les allongements rupture (AR). Les résultats figurent dans le tableau 2.

| **Composition** | A | B | C | D |
|---|---|---|---|---|
| Ethylcellulose | - | 5 | 10 | 15 |
| ML(1+4) 100°C | 96 | 73 | 70 | 70 |
| Shore A | 67 | 68 | 70 | 74 |
| Allongement rupture (%) | 486 | 585 | 590 | 568 |
| Contrainte rupture (MPa) | 18.6 | 19.8 | 18.3 | 16.5 |

On constate que les compositions B, C et D conformes à l'invention, c'est-à-dire comprenant respectivement 5, 10 et 15 pce d'éthylcellulose présentent des plasticités Mooney plus faibles que la composition A témoin, ce qui témoigne d'une forte amélioration de la faculté de mise en oeuvre des compositions conformes à l'invention en comparaison à la composition témoin A. En parallèle, on constate de manière inattendue que ces compositions B, C et D sont caractérisées à la fois par une Shore A et un allongement rupture supérieurs à celle de la composition témoin A.

On constate de façon surprenante qu'un taux aussi bas que 5 pce permet de diminuer fortement la viscosité Mooney de la composition de caoutchouc à l'état cru sans abaisser la valeur de la Shore A de la composition de caoutchouc à l'état cuit, contrairement à une huile plastifiante. Un taux plus élevé d'éthylcellulose, comme par exemple 10 et 15 pce, permet d'obtenir une composition de caoutchouc qui présente à la fois une plasticité Mooney davantage abaissée par rapport au témoin et une valeur de Shore A supérieure à la composition témoin. On observe que ces résultats sont obtenus sans être au détriment de la cohésion si on compare les pourcentages d'allongement et les contraintes à la rupture des compositions B, C et D à ceux de la composition A.

Cet effet des alkylcelluloses selon l'invention est surprenant, dans la mesure où à l'encontre des huiles plastifiantes, ces alkylcelluloses induisent une diminution de la viscosité à l'état cru des compositions sans abaisser ni la rigidité, ni la cohésion des compositions vulcanisées. L'homme du métier peut donc envisager de remplacer au moins une partie des huiles aromatiques ou non aromatiques plastifiantes par une alkylcellulose conforme à l'invention dans les compositions de caoutchouc destinées par exemple à être utilisées dans un composant du pneumatique.

Dans le cas d'une application de ces compositions de caoutchouc en pneumatique, ces résultats témoignent à la fois d'une bonne mise en oeuvre des compositions conformes à l'invention et d'un bon niveau de comportement routier des pneumatiques dont la sous-couche de bande de roulement ou la bande de roulement comprend une composition conforme à l'invention.

## Revendications

1. Composition de caoutchouc à base d'au moins un élastomère diénique, une charge renforçante et une alkylcellulose où le radical alkyle est un alkyle en C1-C6, à condition que si la charge renforçante est une charge inorganique, elle contient en outre un agent de couplage pour lier l'élastomère diénique à la charge inorganique.

2. Composition de caoutchouc selon la revendication 1, **caractérisée en ce que** le radical alkyle est l'éthyle.

3. Composition de caoutchouc selon la revendication 1 ou 2, **caractérisée en ce que** la charge renforçante est un noir de carbone.

4. Composition de caoutchouc selon l'une quelconque des revendications 1 à 3, **caractérisée en ce que** la charge renforçante est une charge inorganique, préférentiellement une silice.

5. Composition de caoutchouc selon la revendication 4, **caractérisée en ce qu'**elle comprend moins de 20 pce, préférentiellement moins de 10 pce de noir de carbone.

6. Composition de caoutchouc selon l'une quelconque des revendications 1 à 5, **caractérisée en ce qu'**elle comprend entre 30 et 150 pce de charge renforçante.

7. Composition de caoutchouc selon la revendication 6, **caractérisée en ce qu'**elle comprend de 50 à 120 pce de charge renforçante.

8. Composition de caoutchouc selon l'une quelconque des revendications 1 à 7, **caractérisée en ce que** le taux d'alkylcellulose est d'au plus 50 pce.

9. Composition de caoutchouc selon l'une quelconque des revendications 1 à 8, **caractérisée en ce que** le taux d'alkylcellulose est compris dans un domaine allant de 1 à 50 pce, préférentiellement 1 à 30 pce.

10. Composition de caoutchouc selon l'une quelconque des revendications 1 à 9, **caractérisée en ce que** le taux d'alkylcellulose est compris dans un domaine allant de 2 à 25 pce.

11. Composition de caoutchouc selon l'une quelconque des revendications 1 à 10, **caractérisée en ce que** l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

12. Procédé pour préparer une composition de caoutchouc selon l'une quelconque des revendications 1 à 11, **caractérisé en ce qu'**il comprend les étapes suivantes :
- incorporer à un élastomère diénique, au cours d'une première étape dite non productive, une charge renforçante, une alkylcellulose où le radical alkyle est un alkyle en C1-C6, le cas échéant un agent de couplage, ainsi que les autres ingrédients de la composition à l'exception du système de réticulation en malaxant thermomécaniquement le tout jusqu'à atteindre une température maximale comprise entre 110 et 190°C ;
- refroidir l'ensemble à une température inférieure à 100°C ;
- incorporer ensuite, au cours d'une seconde étape dite productive un système de réticulation ;
- malaxer le tout jusqu'à une température maximale inférieure à 110°C.

13. Procédé selon la revendication 12, **caractérisé en ce que** le système de réticulation est à base de soufre.

14. Pneumatique, **caractérisé en ce qu'**il comporte une composition de caoutchouc selon l'une quelconque des revendications 1 à 11.

15. Pneumatique selon la revendication 14, **caractérisé en ce que** la composition de caoutchouc est dans la bande de roulement ou dans la sous-couche de bande de roulement radialement intérieure et adjacente à la bande de roulement.

## Patentansprüche

1. Kautschukzusammensetzung auf Basis von mindestens einem Dienelastomer, einem verstärkenden Füllstoff und einer Alkylcellulose, in der es sich bei dem Alkylrest um ein C₁-C₆-Alkyl handelt, mit der Maßgabe, dass sie dann, wenn es sich bei dem verstärkenden Füllstoff um einen anorganischen Füllstoff handelt, auch ein Kupplungsmittel zum Binden des Dienelastomers an den anorganischen Füllstoff enthält.

2. Kautschukzusammensetzung nach Anspruch 1, **dadurch gekennzeichnet, dass** es sich bei dem Alkylrest um Ethyl handelt.

3. Kautschukzusammensetzung nach Anspruch 1 oder 2, **dadurch gekennzeichnet, dass** es sich bei dem verstärkenden Füllstoff um einen Ruß handelt.

4. Kautschukzusammensetzung nach einem der Ansprüche 1 bis 3, **dadurch gekennzeichnet, dass** es sich bei dem verstärkenden Füllstoff um einen anorganischen Füllstoff, vorzugsweise eine Kieselsäure, handelt.

5. Kautschukzusammensetzung nach Anspruch 4, **dadurch gekennzeichnet, dass** sie weniger als 20 phe und vorzugsweise weniger als 10 phe Ruß umfasst.

6. Kautschukzusammensetzung nach einem der Ansprüche 1 bis 5, **dadurch gekennzeichnet, dass** sie zwischen 30 und 150 phe verstärkenden Füllstoff umfasst.

7. Kautschukzusammensetzung nach Anspruch 6, **dadurch gekennzeichnet, dass** sie 50 bis 120 phe verstärkenden Füllstoff umfasst.

8. Kautschukzusammensetzung nach einem der Ansprüche 1 bis 7, **dadurch gekennzeichnet, dass** der Gehalt an Alkylcellulose höchstens 50 phe beträgt.

9. Kautschukzusammensetzung nach einem der Ansprüche 1 bis 8, **dadurch gekennzeichnet, dass** der Gehalt an Alkylcellulose in einem Bereich von 1 bis 50 phe und vorzugsweise 1 bis 30 phe liegt.

10. Kautschukzusammensetzung nach einem der Ansprüche 1 bis 9, **dadurch gekennzeichnet, dass** der Gehalt an Alkylcellulose in einem Bereich von 2 bis 25 phe liegt.

11. Kautschukzusammensetzung nach einem der Ansprüche 1 bis 10, **dadurch gekennzeichnet, dass** das Dienelastomer aus der Gruppe bestehend aus Naturkautschuk, synthetischen Polyisoprenen, Poly-butadienen, Butadien-Copolymeren, Isopren-Copolymeren und Mischungen dieser Elastomere ausgewählt ist.

12. Verfahren zur Herstellung einer Kautschukzusammensetzung nach einem der Ansprüche 1 bis 11, **dadurch gekennzeichnet, dass** man:
- im Lauf eines ersten, als "nichtproduktiv" bezeichneten Schritts in ein Dienelastomer einen verstärkenden Füllstoff, eine Alkylcellulose, in der es sich bei dem Alkylrest um ein C₁-C₆-Alkyl handelt, gegebenenfalls ein Kupplungsmittel sowie die anderen Bestandteile der Zusammensetzung mit Ausnahme des Vernetzungssystems einarbeitet, indem man das Ganze thermomechanisch knetet, bis eine Höchsttemperatur zwischen 110 und 190°C erreicht ist;
- das Ganze auf eine Temperatur von weniger als 100°C abkühlt,
- dann im Lauf eines zweiten, als "produktiv" bezeichneten Schritts ein Vernetzungssystem einarbeitet und
- das Ganze bis zu einer Höchsttemperatur von weniger als 110°C knetet.

13. Verfahren nach Anspruch 12, **dadurch gekennzeichnet, dass** das Vernetzungssystem auf Schwefel basiert.

14. Reifen, **dadurch gekennzeichnet, dass** er eine Kautschukzusammensetzung nach einem der Ansprüche 1 bis 11 umfasst.

15. Reifen nach Anspruch 14, **dadurch gekennzeichnet, dass** sich die Kautschukzusammensetzung in der Lauffläche oder in der Unterschicht der Lauffläche, die radial innen von der Lauffläche liegt und dieser benachbart ist, befindet.

## Claims

1. Rubber composition based on at least one diene elastomer, a reinforcing filler and an alkyl cellulose in which the alkyl radical is a C₁-C₆ alkyl, with the proviso that if the reinforcing filler is an inorganic filler, it also contains a coupling agent for binding the diene elastomer to the inorganic filler.

2. Rubber composition according to Claim 1, **characterized in that** the alkyl radical is ethyl.

3. Rubber composition according to Claim 1 or 2, **characterized in that** the reinforcing filler is a carbon black.

4. Rubber composition according to any one of Claims 1 to 3, **characterized in that** the reinforcing filler is an inorganic filler, preferentially a silica.

5. Rubber composition according to Claim 4, **characterized in that** it comprises less than 20 phr, preferentially less than 10 phr of carbon black.

6. Rubber composition according to any one of Claims 1 to 5, **characterized in that** it comprises between 30 and 150 phr of reinforcing filler.

7. Rubber composition according to Claim 6, **characterized in that** it comprises from 50 to 120 phr of reinforcing filler.

8. Rubber composition according to any one of Claims 1 to 7, **characterized in that** the content of alkyl cellulose is at most 50 phr.

9. Rubber composition according to any one of Claims 1 to 8, **characterized in that** the content of alkyl cellulose is within a range extending from 1 to 50 phr, preferentially 1 to 30 phr.

10. Rubber composition according to any one of Claims 1 to 9, **characterized in that** the content of alkyl cellulose is within a range extending from 2 to 25 phr.

11. Rubber composition according to any one of Claims 1 to 10, **characterized in that** the diene elastomer is selected from the group consisting of natural rubber, synthetic polyisoprenes, polybutadienes, butadiene copolymers, isoprene copolymers and mixtures of these elastomers.

12. Process for preparing a rubber composition according to any one of Claims 1 to 11, **characterized in that** it comprises the following steps:
- incorporating, to a diene elastomer, during a first, "non-productive" step, a reinforcing filler, an alkyl cellulose in which the alkyl radical is a C₁-C₆ alkyl, where appropriate a coupling agent, and also the other ingredients of the composition, with the exception of the crosslinking system, by thermomechanically kneading everything until a maximum temperature of between 110°C and 190°C is achieved;
- cooling the mixture to a temperature below 100°C;
- subsequently incorporating, during a second, "productive" step, a crosslinking system;
- kneading everything up to a maximum temperature of below 110°C.

13. Process according to Claim 12, **characterized in that** the crosslinking system is based on sulphur.

14. Tyre, **characterized in that** it comprises a rubber composition according to any one of Claims 1 to 11.

15. Tyre according to Claim 14, **characterized in that** the rubber composition is in the tread or in the tread underlayer which is radially interior and adjacent to the tread.
